# EUROPEAN PATENT SPECIFICATION

(11) **EP 3 024 211 B1**
(45) Date of publication and mention of the grant of the patent: **02.12.2020**
(21) Application number: 15192413.1
(22) Date of filing: 30.10.2015
(51) Int. Cl.: H04M 19/04

(54) **METHOD AND DEVICE FOR ANNOUNCING VOICE CALL**
VERFAHREN UND VORRICHTUNG ZUR ANKÜNDIGUNG EINES SPRACHANRUFS
PROCÉDÉ ET DISPOSITIF POUR L'ANNONCE D'APPEL VOCAL

(30) Priority: 18.11.2014 CN 201410659725
(43) Date of publication of application: 25.05.2016
(73) Proprietor: Xiaomi Inc., Beijing 100085 (CN)
(72) Inventor: Li, Feiyun, Beijing 100085 (CN); Liang, Yue, Beijing 100085 (CN); Hou, Enxing, Beijing 100085 (CN)
(74) Representative: Kudlek, Franz Thomas

(56) References cited:
- EP-A1- 2 314 031
- EP-A2- 2 139 209
- US-A1- 2006 246 874

## Description

### TECHNICAL FIELD

The present disclosure relates to the field of communication technology and, more particularly, to a method and a device for announcing a voice call.

### BACKGROUND

Smart camera plays a very important role in the aspect of monitoring home security.

In related art, images captured by the camera are obtained by a terminal device, and when performing a voice conversation, the voice is usually sent to a telecommuting opposite terminal directly; in this way, the user will be frightened without mental preparation, and thus the user experience is poor. Prior art examples are disclosed by US2006/246874 and EP2314031.

### SUMMARY

In order to solve the problem existing in the related art, the embodiments of the present disclosure provide a method and a device for announcing a voice call.

According to a first aspect of embodiments of the present disclosure, there is provided a method for announcing a voice call, including:
acquiring a current time at which voice information from a terminal device is received;
determining a time interval between the current time and a time point corresponding to most recent previous voice broadcasting; and
if the time interval is greater than a set time period, issuing of prompt information that the voice information is to be broadcast,
wherein the issuing of prompt information further comprises: recognizing sound of the voice information from the terminal device;
matching the sound of the voice information with stored sound;and
if the matching is successful, broadcasting the stored sound as the prompt voice;and if
the matching fails, broadcasting a prompt voice to prompt that the voice information is to be broadcast.

In one embodiment, the issuing prompt information of broadcasting the voice information is to be broadcast may include:
controlling an indicating lamp to flicker in a set frequency so as to prompt that the voice information is to be broadcast.

In one embodiment, the method for announcing a voice call may further include: broadcasting the voice information.

In one embodiment, the issuing prompt information of broadcasting the voice information may include:
controlling a player to broadcast the voice information with a volume of the voice information increasing gradually from low to loud.

According to a second aspect of embodiments of the present disclosure, there is provided a device for announcing a voice call, including:
an acquiring module configured to acquire a current time at which voice information from a terminal device is received;
a determination module configured to determine a time interval between the current time and a time point corresponding to most recent previous voice broadcasting; and
a prompt module configured to, if the time interval is greater than a set time period, issue prompt information that the voice information is to be broadcast,
a recognition module configured to recognize sound of the voice information from the terminal device; and
a matching module configured to match the sound of the voice information with stored sound; and
the prompt module being configured such that, if the matching is successful, it
broadcasts the stored sound as the prompt voice; and if the matching fails, it
broadcasts a prompt voice to prompt that the voice information is to be broadcast.

In one embodiment, the prompt module may include:
a first prompt submodule configured to broadcast the prompt voice to prompt that the voice information is to be broadcast; and/or,
a second prompt submodule configured to prompt that the voice information is to be broadcast via a flickering of an indicating lamp.

In one embodiment, the device may further include:
a recognition module configured to recognize sound of the voice information from the terminal device; and
a matching module configured to match the sound of the voice information with stored sound;
the prompt module being configured such that, if the matching is successful, it broadcasts the stored sound as the prompt voice; and if the matching fails, it broadcasts a prompt voice to prompt that the voice information is to be broadcast.

In one embodiment, the device may further include:
a broadcasting module configured to broadcast the voice information.

In one embodiment, the prompt module may include:
a third prompt submodule configured to control a player to broadcast the voice information with a volume of the voice information increasing gradually from low to loud.

According to a third aspect of embodiments of the present disclosure, there is provided a device for announcing a voice call as in claim 9.

The present invention also provides a computer program, which when executed on a processor of a pickup device, e.g. a smart camera, performs the above method. The present invention also provides a computer-readable storage medium comprising such a computer program.

The technical solutions provided by the embodiments of the present disclosure may include the following advantageous effects: the time interval between the current time at which the voice information is received and the time point corresponding to the most recent previous voice broadcasting is determined, and whether the prompt information should be issued is determined by a relationship between the time interval and the set time period; in this way, it is helpful for announcing the user located at a side of the pickup device of the voice information from the terminal device, such that the user could have an adequate mental preparation to listen to the voice information without being frightened, and the experience of the user during the voice communication is improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for announcing a voice call, according to an exemplary embodiment.
Fig. 2 is a flow chart of a method for announcing a voice call, according to a first exemplary embodiment.
Fig. 3 is a flow chart of a method for announcing a voice call, according to a second exemplary embodiment.
Fig. 4 is a flow chart of a method for announcing a voice call, according to a third exemplary embodiment.
Fig. 5 is a block diagram of a device for announcing a voice call, according to an exemplary embodiment.
Fig. 6 is a block diagram of a device for announcing a voice call, according to another exemplary embodiment.
Fig. 7 is a block diagram of a device suitable for announcing a voice call, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

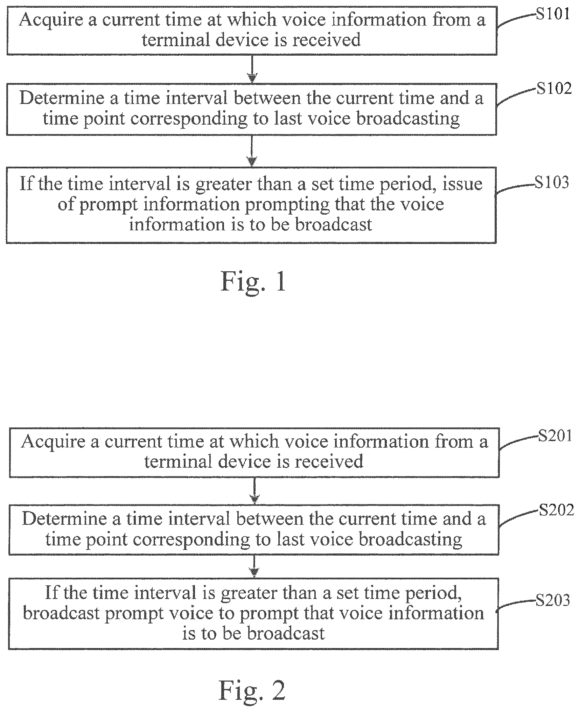

Fig. 1 is a flow chart of a method for announcing a voice call, according to an exemplary embodiment. The method for announcing a voice call may be implemented in smart pickup devices (such as a smart vidicon, and a smart camera). As shown in Fig. 1, the method for announcing a voice call includes the following steps S101-S103.

In step S101, a current time at which voice information from a terminal device is received is acquired.

In one embodiment, the pickup device may be provided with a communication module which could connect to the Internet, establish a communication connection with the terminal device via the Internet by the communication module, and receive voice information from the terminal device via the Internet. For example, the current time is determined to be A.M. 10:05 November 12, 2014.

In step S102, a time interval between the current time and a time point corresponding to most recent previous voice broadcasting is determined.

For example, the time of the most recent previous voice broadcasting is A.M. 10:00 November 12, 2014, the time interval needs to be cumulated from 10:00, and the voice information is received at 10:05, then the time interval between the current time and the most recent previous voice broadcasting is 5 minutes.

In step S103, if the time interval is greater than a set time period, prompt information of broadcasting the voice information is issued.

In one embodiment, the set time period may be set according to individual habit of the user. For example, the user has set the set time period to be 3 minutes. At this time, the time interval (5 minutes) between the current time and the time point corresponding to the most recent previous voice broadcasting which is obtained in the above step S102 is greater than 3 minutes prescribed by the set time period, so that the voice prompt should be broadcast; on the contrary, if the time interval is smaller than the set time period, no voice prompt needs to be broadcast, and the above voice information may be broadcast directly.

In the present embodiment, the time interval between the current time at which the voice information is received and the time point corresponding to the most recent previous voice broadcasting is determined, and whether the prompt information should be issued is determined by a relationship between the time interval and the set time period; in this way, it is helpful for announcing the user located at a side of the pickup device of the voice information from the terminal device, such that the user could have an adequate mental preparation to listen to the voice information without being frightened, and the experience of the user during the voice communication is improved.

In one embodiment, step S103 may include: prompting that the voice information is to be broadcast via a prompt voice.

In one embodiment, step S103 may include: prompting that the voice information is to be broadcast via a flickering of an indicating lamp.

In one embodiment, step S103 may include: controlling a player to broadcast the voice information with a volume of the voice information gradually increasing from low to loud.

In one embodiment, the method for announcing the voice call may include: broadcasting the voice information.

In the above method provided by the embodiments of the present disclosure, whether the prompt information should be issued is determined by the relationship between the time interval and the set time period; in this way, it is helpful for announcing the user located at a side of the pickup device of the voice information from the terminal device, such that the user could have an adequate mental preparation to listen to the voice information without being frightened, and the experience of the user during the voice communication is improved.

Hereinafter, the technical solutions provided by the embodiments of the present disclosure will be explained by using the particular embodiments.

Fig. 2 is a flow chart of a method for announcing a voice call, according to a first exemplary embodiment. In the embodiments of the present disclosure, the user is prompted via a voice prompt that the voice information from the terminal device is to be broadcast. As shown in Fig. 2, the method includes the following steps.
In step S201, a current time at which voice information from a terminal device is received is acquired.

As to the depictions to step S201, the depictions to the above step S101 may be referred to, which is not repeated herein.

In step 202, a time interval between the current time and a time point corresponding to most recent previous voice broadcasting is determined.

As to the depictions to step S202, the depictions to the above step S102 may be referred to, which is not repeated herein.

In step S203, if the time interval is greater than a set time period, a prompt voice is broadcast to prompt that voice information is to be broadcast.

For example, the user may be prompted that the voice information is to be broadcast by broadcasting the prompt voice such as "Ding-dong". Furthermore, the user may set her/his favorite prompt voice by the pickup device; or record her/his voice and then broadcast her/his voice when the pickup device needs to broadcast the prompt voice; or record voice of the user at the side of the terminal device, so as to ensure consistence between the prompt voice and the broadcast voice when the pickup device needs to broadcast the prompt voice, which greatly improves the experience of the user at the side of the pickup device when listening to the voice.

Alternatively, the method for announcing the voice call may further include:
recognizing sound of the voice information from the terminal device;
matching the sound of the voice information with stored sound; and
if the sound of the voice information is matched with the stored sound, broadcasting the stored sound as the prompt voice; and if the sound of the voice information is not matched with the stored sound, broadcasting the prompt voice to prompt that the voice information is to be broadcast.

The pickup device may broadcast the prompt voice consistent with the sound of the voice information by recognizing the sound of the voice information from the terminal device and matching the sound with the stored sound of the user, which improves the experience of the user when listening to the voice information to a greater extent.

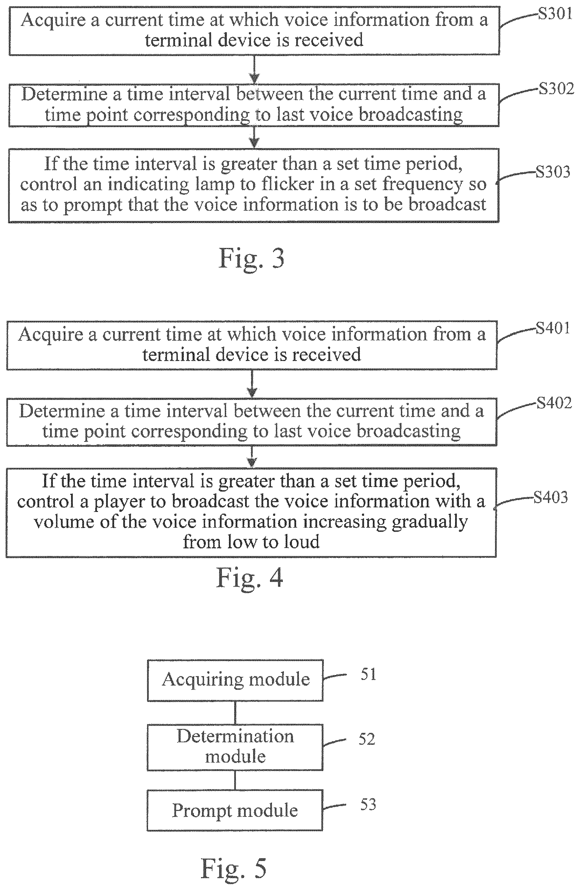

Fig. 3 is a flow chart of a method for announcing a voice call, according to a second exemplary embodiment. In the embodiments of the present disclosure, the user is prompted that the voice information from the terminal device is to be broadcast via a flicking of an indicating lamp. As shown in Fig. 3, the method includes the following steps.

In step S301, a current time at which voice information of a terminal device is received is acquired.

As to the depictions to step S301, the depictions to the above step S101 may be referred to, which is not repeated herein.

In step 302, a time interval between the current time and a time point corresponding to most recent previous voice broadcasting is determined.

As to the depictions to step S302, the depictions to the above step S102 may be referred to, which is not repeated herein.

In step S303, if the time interval is greater than a set time period, the indicating lamp is controlled to flicker in a set frequency so as to prompt that the voice information is to be broadcast.

The indicating lamp is used for indicating a working status of the pickup device. For example, "normally on" represents that the pickup device is in a normal working status, and "flickering" represents that the pickup device is in a course of establishing a connection with a communication network. In this embodiment, the indicating lamp may be controlled to flicker in a set frequency so as to prompt the user that the voice information is to be broadcast. When perceiving the flickering of the indicating lamp, the user may make a sufficient mental preparation to listen to the voice information from the terminal device without being frightened, and the experience of the user during the voice communication is improved.

Fig. 4 is a flow chart of a method for announcing a voice call, according to a third exemplary embodiment. In the embodiments of the present disclosure, the voice information from the terminal device being broadcast is prompted via a volume of a player broadcasting the voice information. As shown in Fig. 4, the method includes the following steps.

In step S401, a current time at which voice information of a terminal device is received is acquired.

As to the depictions to step S401, the depictions to the above step S101 may be referred to, which is not repeated herein.

In step 302, a time interval between the current time and a time point corresponding to most recent previous voice broadcasting is determined.

As to the depictions to step S402, the depictions to the above step S102 may be referred to, which is not repeated herein.

In step S403, if the time interval is greater than a set time period, a player is controlled to broadcast the voice information with a volume of the voice information gradually increasing from low to loud.

In this embodiment, the voice information may be broadcast to the user by controlling the player to broadcast the voice information with a volume of the voice information gradually increasing from low to loud. When the user listens to a relatively low sound of the voice information, he/she may make a sufficient mental preparation to listen to the voice information from the terminal device without being frightened, and the experience of the user during the voice communication is improved.

Alternatively, the above method may further include the following step: broadcasting the voice information. After prompting the user that the voice information needs to be broadcast, the voice is broadcast; in this way, the user may feel very comfortable during listening to the voice information broadcast by the pickup device, which improves the user experience greatly.

Fig. 5 is a block diagram of a device for announcing a voice call, according to an exemplary embodiment. As shown in Fig. 5, the device for announcing a voice call includes:
an acquiring module 51 configured to acquire a current time at which voice information from a terminal device is received;
a determination module 52 configured to determine a time interval between the current time and a time point corresponding to most recent previous voice broadcasting; and
a prompt module 53 configured to, if the time interval is greater than a set time period, issue prompt information of broadcasting the voice information.

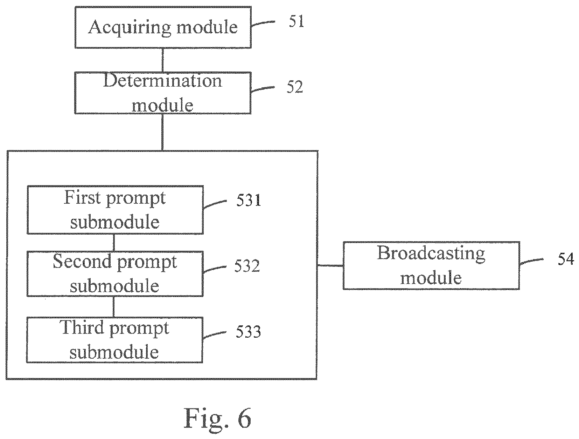

As shown in Fig. 6, the prompt module 53 may include:
a first prompt submodule 531 configured to prompt that the voice information is to be broadcast via a prompt voice; and/or,
a second prompt submodule 532 configured to prompt that the voice information is to be broadcast via a flickering of an indicating lamp.

In one embodiment, the device further includes:
a recognition module (not shown in the drawings) configured to recognize sound of the voice information from the terminal device;
a matching module (not shown in the drawings) configured to match the sound of the voice information with stored sound; and
if the matching is successful, the prompt module 53 broadcasts the stored sound as the prompt voice; and if the matching fails, the prompt module 53 broadcasts a prompt voice to prompt that the voice information is to be broadcast.

In one embodiment, the device further includes:
a broadcasting module 54 configured to broadcast the voice information.

In one embodiment, the prompt module 53 may further include:
a third prompt submodule 533 configured to control an indicating lamp to flicker in a set frequency so as to prompt that the voice information is to be broadcast.

With respect to the devices in the above embodiments, the specific manners for performing operations for individual modules therein have been described in detail in the embodiments regarding the methods, which will not be elaborated herein.

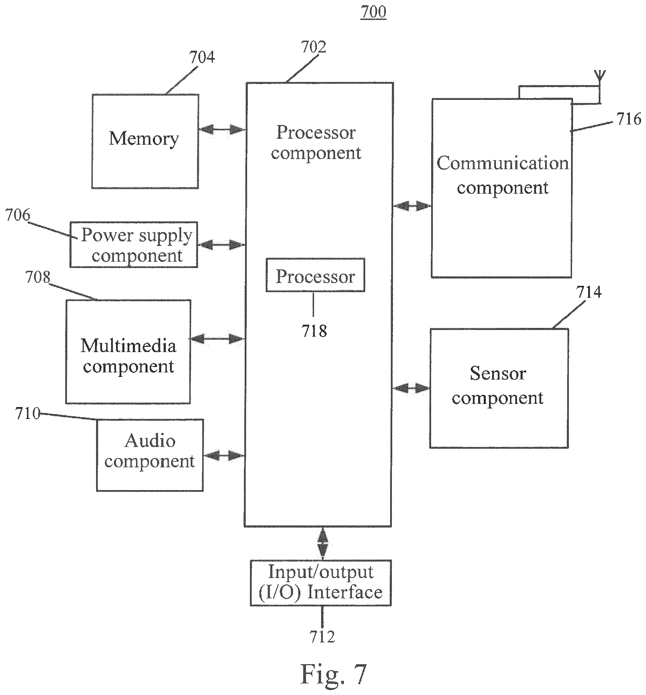

Fig. 7 is a block diagram of a device 700 suitable for announcing a voice call, according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for announcing a voice call, wherein the method comprises:
acquiring (S101, S201, S301, S401) a current time at which voice information from a terminal device is received;
determining (S102, S202, S302, S402) a time interval between the current time and a time point corresponding to most recent previous voice broadcasting; and
if the time interval is greater than a set time period, issuing (S103) of prompt information prompting that the voice information is to be broadcast,
wherein the issuing of prompt information further comprises:
recognizing sound of the voice information from the terminal device;
matching the sound of the voice information with stored sound; and
if the matching is successful, broadcasting the stored sound as the prompt voice;and if the matching fails, broadcasting a prompt voice to prompt that the voice information is to be broadcast.

2. The method according to claim 1, **characterized in that** the issuing (S103) of prompt information that the voice information is to be broadcast comprises:
controlling (S303) an indicating lamp to flicker in a set frequency so as to prompt that the voice information is to be broadcast.

3. The method according to any one of the preceding claims, **characterized in that**, after the issuing (S103) of prompt information that the voice information is to be broadcast, the method further comprises:
broadcasting the voice information.

4. The method according to any one of the preceding claims, **characterized in that** the issuing (S103) of prompt information that the voice information is to be broadcast comprises:
controlling (S403) a player to broadcast the voice information with a volume of the voice information increasing gradually from low to loud.

5. A device for announcing a voice call, wherein the device comprises:
an acquiring module (51) configured to acquire a current time at which voice information from a terminal device is received;
a determination module (52) configured to determine a time interval between the current time and a time point corresponding to most recent previous voice broadcasting;
a prompt module (53) configured to, if the time interval is greater than a set time period, issue prompt information prompting that the voice information is to be broadcast,
a recognition module configured to recognize sound of the voice information from the terminal device; and
a matching module configured to match the sound of the voice information with stored sound; and
the prompt module (53) being configured such that, if the matching is successful, it broadcasts the stored sound as the prompt voice; and if the matching fails, it broadcasts a prompt voice to prompt that the voice information is to be broadcast.

6. The device according to claim 5, **characterized in that** the prompt module (53) comprises:
a first prompt submodule (531) configured to broadcast the prompt voice to prompt that ' the voice information is to be broadcast; and/or,
a second prompt submodule (532) configured to prompt that the voice information is to be broadcast via a flickering of an indicating lamp.

7. The device according to any one of claims 5 or 6, **characterized in that** the device further comprises:
a broadcasting module (54) configured to broadcast the voice information.

8. The device according to any one of claims 5-7, **characterized in that** the prompt module (53) comprises:
a third prompt submodule (533) configured to control a player to broadcast the voice information with a volume of the voice information increasing gradually from low to loud.

9. A device for announcing a voice call wherein the device comprises:
a processor (720); and
a memory (704) for storing instructions executable by the processor (720);
wherein the processor (720) is configured to perform a method according to any claims 1 to 4 when executing said instructions.

10. A computer program, which when executed on a processor of a pickup device, performs a method according to any one of claims 1 to 4.

11. A computer-readable storage medium comprising a computer program according to claim 10.

## Patentansprüche

1. Verfahren zum Ansagen eines Sprachanrufs, wobei das Verfahren folgendes umfasst:
Erfassen (S101, S201, S301, S401) einer aktuellen Zeit, zu der Sprachinformationen von einem Endgerät empfangen werden;
Bestimmen (S102, S202, S302, S402) eines Zeitintervalls zwischen der aktuellen Zeit und einem Zeitpunkt, der einer letzten vorhergehenden Sprachübertragung entspricht; und
wenn das Zeitintervall größer als eine festgelegte Zeitspanne ist, Ausgeben (S103) von Aufforderungs-Informationen, die dazu auffordern, die Sprachinformationen zu übertragen,
wobei das Ausgeben von Aufforderungs-Informationen weiterhin folgendes umfasst:
Erkennen eines Klangs der Sprachinformationen von dem Endgerät;
Abgleichen des Klangs der Sprachinformationen mit einem gespeicherten Klang; und
wenn der Abgleich erfolgreich ist, Übertragen des gespeicherten Klangs als Aufforderungsstimme; und wenn der Abgleich fehlschlägt, Übertragen einer Aufforderungsstimme, die dazu auffordert, die Sprachinformationen zu übertragen.

2. Verfahren nach Anspruch 1, **dadurch gekennzeichnet, dass** das Ausgeben (S103) der Aufforderungsinformationen, dass die Sprachinformationen zu übertragen sind, folgendes umfasst:
Steuern (S303) einer Anzeigelampe, so dass sie in einer eingestellten Frequenz flackert, um aufzufordern, dass die Sprachinformationen zu übertragen sind.

3. Verfahren gemäß einem der vorhergehenden Ansprüche, **dadurch gekennzeichnet, dass** nach dem Ausgeben (S103) von Aufforderungsinformationen, dass die Sprachinformationen zu übertragen sind, das Verfahren weiterhin folgendes umfasst:
Übertragen der Sprachinformationen.

4. Verfahren nach einem der vorhergehenden Ansprüche, **dadurch gekennzeichnet, dass** die Ausgabe (S103) von Aufforderungsinformationen, dass die Sprachinformationen zu übertragen sind, folgendes umfasst:
Steuern (S403) einer Abspielvorrichtung, um die Sprachinformationen mit einer Lautstärke der Sprachinformationen zu übertragen, die allmählich von niedrig bis laut ansteigt.

5. Vorrichtung zum Ansagen eines Sprachanrufs, wobei die Vorrichtung folgendes aufweist:
ein Erfassungsmodul (51), das so konfiguriert ist, dass es eine aktuelle Zeit erfasst, zu der Sprachinformationen von einem Endgerät empfangen werden;
ein Bestimmungsmodul (52), das konfiguriert ist, um ein Zeitintervall zwischen der aktuellen Zeit und einem Zeitpunkt zu bestimmen, der der letzten vorhergehenden Sprachübertragung entspricht;
ein Aufforderungsmodul (53), das so konfiguriert ist, dass es, wenn das Zeitintervall größer als eine eingestellte Zeitperiode ist, Aufforderungsinformationen ausgibt, die dazu auffordern, dass die Sprachinformationen zu übertragen sind,
ein Erkennungsmodul, das so konfiguriert ist, dass es einen Klang der Sprachinformationen vom Endgerät erkennt; und
ein Abgleichmodul, das so konfiguriert ist, dass es den Klang der Sprachinformationen mit dem gespeicherten Klang abgleicht; und
wobei das Aufforderungsmodul (53) so konfiguriert ist, dass es bei erfolgreichem Abgleich den gespeicherten Klang als die Aufforderungsstimme überträgt; und dass, wenn der Abgleich fehlschlägt, es eine Aufforderungsstimme überträgt, um aufzufordern, dass die Sprachinformationen übertragen werden sollen.

6. Vorrichtung nach Anspruch 5, **dadurch gekennzeichnet, dass** das Aufforderungsmodul (53) folgendes aufweist:
ein erstes Aufforderungsuntermodul (531), das so konfiguriert ist, dass es die Aufforderungsstimme überträgt, um aufzufordern, dass die Sprachinformationen zu übertragen sind; und/oder,
ein zweites Aufforderungsuntermodul (532), das so konfiguriert ist, dass es durch das Flackern einer Anzeigelampe auffordert, die Sprachinformationen zu übertragen.

7. Vorrichtung nach einem der Ansprüche 5 oder 6, **dadurch gekennzeichnet, dass** die Vorrichtung ferner umfasst:
ein Übertragungsmodul (54), das so konfiguriert ist, dass es die Sprachinformationen überträgt.

8. Vorrichtung nach einem der Ansprüche 5-7, **dadurch gekennzeichnet, dass** das Aufforderungsmodul (53) folgendes aufweist:
ein drittes Aufforderungsuntermodul (533), das so konfiguriert ist, dass es eine Abspielvorrichtung so steuert, dass sie die Sprachinformationen mit einer Lautstärke der Sprachinformationen überträgt, die allmählich von niedrig auf laut ansteigt.

9. Vorrichtung zum Ansagen eines Sprachanrufs, wobei die Vorrichtung folgendes aufweist:
einen Prozessor (720); und
einen Speicher (704) zum Speichern von durch den Prozessor (720) ausführbaren Befehlen;
wobei der Prozessor (720) konfiguriert ist zum: Durchführen eines Verfahrens gemäß irgendeinem der Ansprüche 1 bis 4, wenn die Befehle ausgeführt werden.

10. Computerprogramm, das, wenn es auf einem Prozessor einer Aufnahmevorrichtung ausgeführt wird, ein Verfahren nach einem der Ansprüche 1 bis 4 durchführt.

11. Computerlesbares Speichermedium, das ein Computerprogramm nach Anspruch 10 aufweist.

## Revendications

1. Procédé pour annoncer un appel vocal, dans lequel le procédé comporte les étapes consistant à :
acquérir (S101, S201, S301, S401) une heure actuelle à laquelle des informations vocales sont reçues d'un dispositif terminal ;
déterminer (S102, S202, S302, S402) un intervalle de temps entre l'heure actuelle et un instant correspondant à la diffusion vocale précédente la plus récente ; et
si l'intervalle de temps est supérieur à une période de temps définie, émettre (S103) des informations d'invite demandant à ce que les informations vocales soient diffusées, dans lequel l'émission d'informations d'invite comporte en outre les étapes consistant à :
reconnaître le son des informations vocales provenant du dispositif terminal ;
mettre en correspondance le son des informations vocales avec du son stocké ; et
si la correspondance est réussie, diffuser le son stocké comme voix d'invite ; et si la correspondance échoue, diffuser une voix d'invite pour demander à ce que les informations vocales soient diffusés.

2. Procédé selon la revendication 1, **caractérisé en ce que** l'émission (S103) d'informations d'invite demandant à ce que les informations vocales soient diffusées comporte l'étape consistant à :
commander (S303) un voyant indicateur de manière à ce qu'il clignote à une fréquence réglée de manière à demander à ce que les informations soient diffusées.

3. Procédé selon l'une quelconque des revendications précédentes, **caractérisé en ce que**, après l'émission (S103) d'informations d'invite demandant à ce que les inventions vocales soient diffusées, le procédé comporte en outre l'étape consistant à :
diffuser les informations vocales.

4. Procédé selon l'une quelconque des revendications précédentes, **caractérisé en ce que** l'émission (S103) d'informations d'invite à ce que les informations vocales soient diffusées comporte l'étape consistant à :
commander (S403) un lecteur de manière à diffuser les informations vocales avec un volume des informations vocales augmentant graduellement de faible à fort.

5. Dispositif pour annoncer un appel vocal, dans lequel le dispositif comporte :
un module d'acquisition (51) configuré pour acquérir une heure actuelle à laquelle des informations vocales sont reçues d'un dispositif terminal ;
un module de détermination (52) configuré pour déterminer un intervalle de temps entre l'heure actuelle et un instant correspondant à la diffusion vocale précédente la plus récente ; et
un module d'invite (53) configuré pour, si l'intervalle de temps est supérieur à une période de temps définie, émettre des informations d'invite demandant à ce que les informations vocales soient diffusées,
un module de reconnaissance configuré pour reconnaître le son des informations vocales provenant du dispositif terminal ; et
un module de mise en correspondance configuré pour faire correspondre le son des informations vocales avec du son stocké ; et
le module d'invite (53) étant configuré de telle sorte que, si la correspondance est réussie, il diffuse le son stocké comme la voix d'invite ; et si la correspondance échoue, il diffuse une voix d'invite pour demander à ce que les informations vocales soient diffusées.

6. Dispositif selon la revendication 5, **caractérisé en ce que** le module d'invite (53) comporte :
un premier sous-module d'invite (531) configuré pour diffuser la voix d'invite pour demander à ce que les informations vocales soient diffusées, et/ou
un troisième sous-module (532) configuré pour demander à ce que les informations vocales soient diffusées via un clignotement d'un voyant indicateur.

7. Dispositif selon l'une quelconque des revendications 5 ou 6, **caractérisé en ce que** le dispositif comporte en outre :
un module de diffusion (54) configuré pour diffuser les informations vocales.

8. Dispositif selon l'une quelconque des revendications 5 à 7, **caractérisé en ce que** le module d'invite (53) comporte :
un troisième sous-module d'invite (53) configuré pour commander un lecteur de manière à diffuser les informations vocales avec un volume des informations vocales augmentant graduellement de faible à fort.

9. Dispositif pour annoncer un appel vocal, dans lequel le dispositif comporte :
un processeur (720) ; et
une mémoire (704) pour stocker des instructions exécutables par le processeur (720) ;
dans lequel le processeur (720) est configuré pour mettre en œuvre un procédé selon l'une quelconque des revendications 1 à 4 lors de l'exécution desdites instructions.

10. Programme informatique qui, lorsqu'il est exécuté sur un processeur d'un dispositif de détection, met en œuvre un procédé selon l'une quelconque des revendications 1 à 4.

11. Support de stockage lisible par ordinateur comportant un programme informatique selon la revendication 10.
